# EUROPEAN PATENT APPLICATION

(11) **EP 4 546 232 A1**
(43) Date of publication of application: **30.04.2025**
(21) Application number: 23210362.2
(22) Date of filing: 16.11.2023
(51) Int. Cl.: G06Q 10/0631, G06Q 10/20, G06Q 50/10

(54) **DECISION SUPPORT SYSTEM FOR SCHEDULING MAINTENANCE SERVICES**

(30) Priority: 25.10.2023 US 202363545564 P
(71) Applicant: Koninklijke Philips N.V., 5656 AG Eindhoven (NL)
(72) Inventor: DEMEWEZ, Tiblets Zeray, Eindhoven (NL); BARBIERI, Mauro, Eindhoven (NL); KOSTER, Robert Paul, 5656AG Eindhoven (NL)
(74) Representative: Philips Intellectual Property & Standards

(57) **Abstract**

A service case scheduling system includes an intake interface, an electronic processor, and a scheduling electronic processing device. The intake interface is configured to receive service cases for corresponding medical devices. The electronic processor is programmed to, for a service case under assessment: compute impact factor scores for the service case under assessment, wherein the impact factor scores are indicative of respective impacts of the service case under assessment; and aggregate the impact factor scores to generate an impact score for the service case under assessment. The scheduling electronic processing device is configured to present a user interface displaying a list of service cases received by the intake interface and annotated with corresponding impact scores computed by the electronic processor.

## Description

### FIELD OF THE INVENTION

The following relates generally to the medical device maintenance arts, medical imaging device maintenance arts, medical device maintenance scheduling arts, medical device maintenance visualization arts, and related arts.

### BACKGROUND OF THE INVENTION

Medical imaging device vendors can provide maintenance services to their customers all over the world. Some of the customers have a wide range of medical systems and others have a few. They are geographically distributed in rural and urban areas. Moreover, customers differ by size, type of contract, number/types of contracted services, devices purchased from the vendor, and so forth.

However, not all customers experience (proactive) maintenance services the same way. For example, customers situated in rural areas may have slower response time from the vendor, which can lead to customer dissatisfaction.

Vendors have limited resources to solve customer cases, which can lead to response delays. The vendor may prioritize cases to optimize their resource utilization (e.g., minimize cost) at the expense of customers who will experience sub-optimal service (e.g., longer downtime) due to their location or other characteristics. This can adversely impact rural customers who therefore have longer waits as compared with customers in cities or other more densely populated areas.

In a typical dispatching scenario, alerts from diagnostic models and service requests received from customers are reviewed by a regional or global team of Remote Service Engineers (RSE) and are sent to appropriate market organizations alongside possible root causes and service actions. The RSEs review the alerts and service requests and create service work orders (i.e., cases) based on their knowledge and experience. The priority of the service cases within each market and region is then determined by the receiving local organization mainly based on subjective criteria. This can result in critical and impactful alerts having ignored or delayed remediation.

The following discloses certain improvements to overcome these problems and others.

### SUMMARY OF THE INVENTION

In one aspect, a service case scheduling system is disclosed, comprising an intake interface, an electronic processor, and a scheduling electronic processing device. The intake interface is configured to receive service cases for corresponding medical devices. The electronic processor is programmed to, for a service case under assessment: compute impact factor scores for the service case under assessment, wherein the impact factor scores are indicative of respective impacts of the service case under assessment; and aggregate the impact factor scores to generate an impact score for the service case under assessment. The scheduling electronic processing device is configured to present a user interface displaying a list of service cases received by the intake interface and annotated with corresponding impact scores computed by the electronic processor.

In another aspect, a non-transitory computer readable medium stores instructions readable and executable by at least one electronic processor to, for each service case of a plurality of received service cases for corresponding medical devices: assign impact factor scores for a plurality of impact factors, wherein the impact scores are indicative of respective impacts of the service case; and compute an impact score for the service case based on the impact factor scores. The instructions are further readable and executable to output a list of the received service cases annotated with the corresponding computed impact scores.

In another aspect, a service case scheduling method is disclosed. Service cases for corresponding medical devices are received with an intake interface. With an electronic processor, impact factor scores are computed for each received service case. The impact factor scores are indicative of respective impacts of the service case under assessment. With the electronic processor, the impact factor scores for each service case are aggregated to generate an impact score for the service case. With a scheduling electronic processing device: scheduled times are assigned for resolving respective service cases based on user inputs received via the user interface; and the scheduled times of the current service cases are output to a plurality of customer electronic processing devices operable by a corresponding plurality of customers of the medical devices.

One advantage resides in providing timely proactive or reactive maintenance services to customers regardless of customer location.

Another advantage resides in optimizing vendor resource utilization in resolving customer issues with medical devices.

Another advantage resides in objectively creating a schedule of servicing customer medical devices by a vendor.

Another advantage resides in reduced downtown of medical devices.

A given embodiment may provide none, one, two, more, or all of the foregoing advantages, and/or may provide other advantages as will become apparent to one of ordinary skill in the art upon reading and understanding the present disclosure.

### BRIEF DESCRIPTION OF THE DRAWINGS

The disclosure may take form in various components and arrangements of components, and in various steps and arrangements of steps. The drawings are only for purposes of illustrating the preferred embodiments and are not to be construed as limiting the disclosure.
Fig. 1 diagrammatically illustrates an illustrative system for scheduling servicing of medical devices in accordance with the present disclosure.
Fig.2 shows exemplary flow chart operations of the system of Fig. 1.
Fig. 3 shows another embodiment of the system of Fig. 1.

### DETAILED DESCRIPTION EMBODIMENTS

Service cases are initiated by a customer calling in a problem with an imaging device, or by automated log monitoring detecting a problem with the imaging device. In either case, the service case is received and distributed to a regional office that handles service cases in that geographical area. The regional office then prioritizes service cases based on service engineer availability and expertise, travel considerations, case priority, and so forth.

However, the prioritization of service cases can be subjective in nature, and can be biased toward, for example, prioritizing service cases close to the physical site of the regional office over service cases originating at rural hospitals. While this might be addressed by employing more objective prioritization criteria, another problem is lack of communication. The customer is not privy to the rationale for how the customer's case is prioritized. This can lead to customer dissatisfaction.

The following discloses computing an impact score for each new service case. The impact score is an objective score that is calculated based on the scores of various factors, i.e., "impact factor scores." The impact factor scores are indicative of respective impacts of the service case under assessment. Examples of the impact factors include an average number of patients affected per unit time of downtime, a number of medical personnel who will be affected, and a cost for rescheduling urgent patients to other resources. Many of the impact factor scores can be derived from log data of the imaging device or radiology department. For example, the average number of patients affected per hour or day of downtime can be determined from the log data, as can the number of medical personnel who will be affected. A cost for rescheduling urgent patients to other resources can be estimated based on the capabilities of the radiology department. For example, if the service case is for a magnetic resonance imaging (MRI) scanner but the radiology department has two other MRI scanners, then the urgent patient rescheduling cost is likely to be low; whereas, if the subject radiology department is at a rural hospital with only the single MRI scanner and the nearest other hospital is a 45 minute ambulance ride away then the urgent patient rescheduling cost is likely to be high. The impact score thus includes various impact factor scores that are combined, e.g., as a weighted sum, to compute the impact score for the service case. The impact score can be updated over time, taking into account factors such as the length of time that the ticket has been open, and any changes to the impact factors.

The impact score, and possibly the various constituent score factors, is presented to the dispatcher of the regional office for use in prioritizing the service case. Additionally, the impact score including its factors is presented to the customer (either in raw form, or converted to a corresponding textual explanation using template language or the like). This can be done via email, a web-based service case status portal, or so forth. This advantageously improves communication with the customer and provides the customer with a rational basis for the prioritization of the customer's case. In some embodiments the customer can configure the pathway by which the impact score is conveyed to the customer. There may also be a customer feedback component that provides data for updating the impact score calculation algorithm.

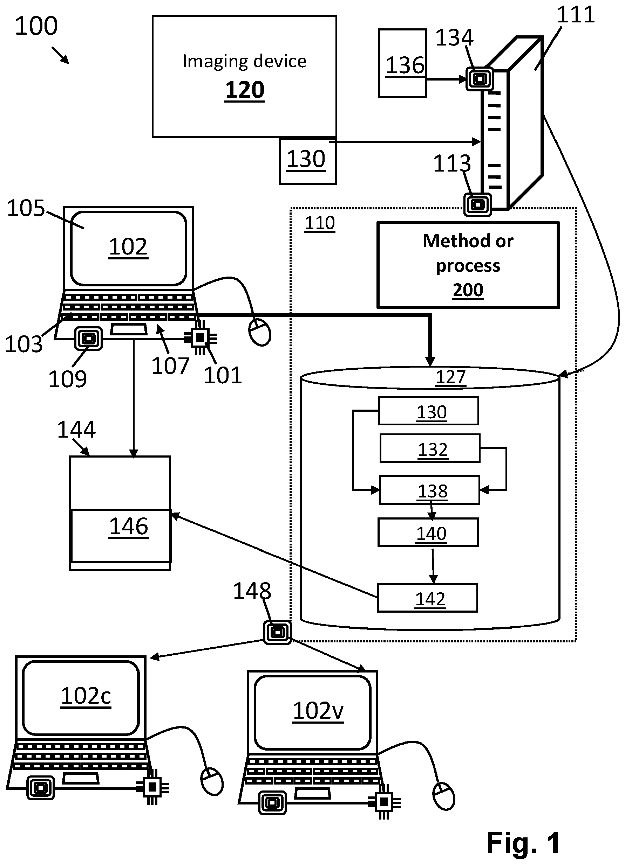

With reference to Fig.1, an illustrative servicing case scheduling system 100 for supporting a service engineer in servicing a medical device 120 (e.g., a medical imaging device - also referred to as an imaging device, imaging scanner, and variants thereof) is diagrammatically shown. By way of some non-limiting illustrative examples, the medical imaging device under service may be a magnetic resonance imaging (MRI) scanner, a computed tomography (CT) scanner, a positron emission tomography (PET) scanner, a gamma camera for performing single photon emission computed tomography (SPECT), an interventional radiology (IR) device, or so forth. While the illustrative medical devices are medical imaging devices, the medical device 120 could be another type of medical device, such as a radiation therapy device, a mechanical respirator, or so forth.

As shown in Fig. 1, the scheduling system 100 includes, or is accessible by, a service device 102 that may for example be a workstation or electronic processing device used by a user (e.g., a service engineer (SE), such as a remote SE (RSE)). The service device 102 (i.e., a scheduling electronic processing device 102) may for example be a workstation computer accessed by an RSE. The service device 102 can be a desktop computer or a personal device, such as a mobile computer system such as a laptop or smart device. While a single workstation 102 for a single RSE is shown in Fig.1 by way of illustration, more generally each RSE working at any given time will be assigned to a corresponding workstation 102. For example, if six RSEs are working at a given time, each will typically work at a corresponding workstation 102 so that there will be six workstations 102 active at that time.

The service device 102 includes a display device 105 via which alerts generated by predictive failure models are displayed, optionally along with likely root cause and service action recommendation information if this is provided by the predictive model. The service device 102 also preferably allows the service engineer to interact with the servicing support system via at least one user input device 103 such a mouse, keyboard, or touchscreen. The service device further includes an electronic processer 101 and non-transitory storage medium 107 (internal components which are diagrammatically indicated in Fig. 1). The non-transitory storage medium 107 stores instructions which are readable and executable by the electronic processor 101 for interfacing with the servicing support system 100. The service device 102 also includes a communication interface 109 to communicate with a backend server or processing device 111, which typically implements the computational aspects of the servicing support system 100 (e.g., the server 111 has the processing power for implementing computationally complex aspects of the servicing support system 100). Such communication interfaces 109 include, for example, a wired and/or wireless Ethernet interface (e.g., in the case in which the service device 102 is an RSE workstation); or in the case in which the service device 102 is a portable FSE device the interface 109 may be a wireless Wi-Fi or 4G/5G interface or the like for connection to the Internet and/or an intranet. Some aspects of the servicing support system 100 may also be implemented by cloud processing or other remote processing (that is, the server computer 111 may be embodied as a cloud-based computing resource comprising a plurality of interconnected servers).

In illustrative Fig. 1, the scheduling system further includes a backend 110 (e.g., implemented and/or owned by the imaging device vendor or leased by the vendor from a cloud computing service provider). The backend 110 receives log data (e.g., a machine log automatically generated by the medical imaging device 120, a service log for the medical imaging device 120, and/or so forth) on a continuous or occasional basis (e.g., in some setups the imaging device 120 uploads machine log entries to the backend 110 on a daily basis). The backend processing for performing predictive fault modeling using predictive models. The backend server 111 is equipped with an electronic processor 113 (diagrammatically indicated internal component). The server 111 is equipped with non-transitory storage medium 127 (internal components which are diagrammatically indicated in Fig. 1). While a single server computer is shown, it will be appreciated that the backend 110 may more generally be implemented on a single server computer, or a server cluster, or a cloud computing resource comprising ad hoc-interconnected server computers, or so forth. Furthermore, while Fig. 1 shows a single medical imaging device 120, more generally the database backend 110 will receive log data from many medical imaging devices (e.g., tens, hundreds, or more imaging devices) and performs the disclosed processing for a medical imaging device undergoing servicing using the log data generated by that device.

The non-transitory computer readable medium 127 stores machine log data 130 received from the medical device 120. The non-transitory computer readable medium 127 stores one or more predictive models 132 trained to identify a potential problem with a corresponding medical device 120. In addition, the server 111 includes an intake interface 134 configured to receive service cases 136 for corresponding medical devices 120. For example, the intake interface 134 can comprise a natural communication pathway (e.g., email, telephone, a shared cloud folder, and so forth).

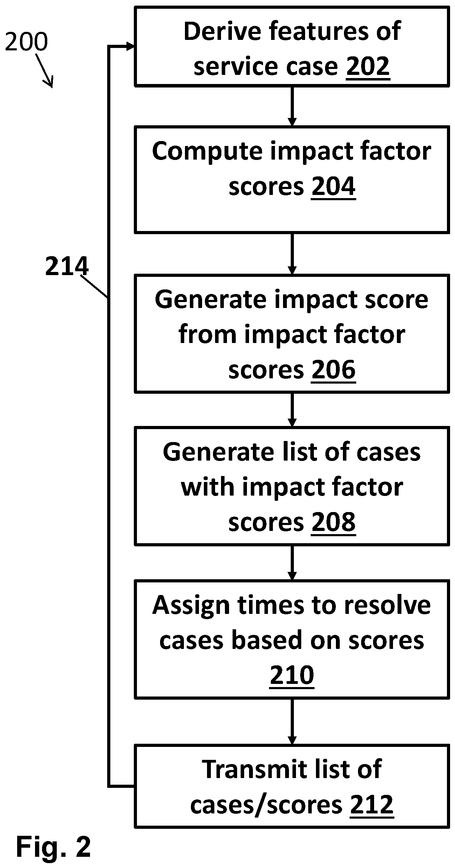

The non-transitory storage medium 127 also stores instructions executable by the electronic processor 113 of the backend server 111 to perform a service case scheduling method 200. With continuing reference to Fig. 1 and further reference to Figs. 2-4, an illustrative embodiment of the method 200 executable by the electronic processor 113 of the backend server 111 is diagrammatically shown as a flowchart. In some examples, the method 200 may be performed at least in part by cloud processing.

At an optional operation 202, for a service case 136 under assessment, the server 111 is programmed to derive features of the service case 136 under assessment by analysis of the log data 130 from the corresponding medical device 120. For example, the server 111 can apply one or more of the diagnostic models 132 to derive the features of the service case 136. The optional features provide for a representation of the service case 136, and features could include, by way of nonlimiting illustrative examples: the type of medical device 120 that is the subject of the service case (e.g., in the case of an imaging device suitably represented by a modality type (CT, MRI, et cetera) and other features derivable from the make and model of the medical imaging device 120 representing various capabilities of the medical imaging device), a log data-derived count or list of operators of the medical device over a defined time period (e.g., last month), a log data-derived count or list of patients of the medical device over the defined time period, a log data-derived count or list of imaging examinations of each type over the defined time period (e.g., number of brain scans, number of chest scans, et cetera), and/or so forth. Some features could also relate to a fleet-level context. For example, a feature may indicate the number of equivalent medical devices in the fleet to which patients can be reassigned (e.g., if the service case 136 is for an MRI scanner, then this feature may include a count of the remaining operational MRI scanners in the fleet to which patients scheduled for an MRI examination can be reassigned). If the service case 136 is generated due to an alert generated by a predictive failure model or other diagnostic model that is run on the log data, then the information output by the predictive failure model or other diagnostic model may also constitute derived features of the service case 136 (e.g., such as a predicted remaining lifetime of an X-ray tube or other component for which the alert is generated by a predictive failure model).

At an operation 204, the server 111 is programmed to compute impact factor scores 138 for the service case 136 under assessment. The impact factor scores 138 are indicative of respective impacts of the service case 136 under assessment. These impacts may include impacts on the performance of the medical imaging device that is the subject of the service case 136, and/or may include impacts on a fleet of medical devices that includes the medical imaging device that is the subject of the service case 136. As an example of the latter, a fleet-level impact may include the impact of transfer of workload from the medical imaging device that is the subject of the service case 136 to other medical imaging devices of the fleet. The impact factor scores 138 are indicative of respective impacts of the service case 136 under assessment, in some nonlimiting illustrative embodiments including at least a patient rescheduling impact and a personnel idle impact. The impact factors can include, for example, one or more of: an average number of patients affected per unit time of downtime of the medical imaging device that is the subject of the service case 136 due to the service case 136; a number of medical personnel who will be idled by the service case 136; a diagnostic impact of the service case 136 (for example, reduced performance of the fleet of medical devices as a whole if the service case causes reassignment of patients to a different medical device or devices with lesser diagnostic capabilities, such producing lower resolution images in the case of a fleet of medical imaging devices); a fleet improvement impact (e.g., if the service case will modify the subject medical device to provide a new capability that is not currently available in the fleet); a cost of increased warning messages or errors recorded in the log data of the medical device due to the problem that is to be serviced (e.g., potentially resulting in slower patient throughput); a cost for rescheduling urgent patients to other resources due to the service case 136; and so forth. In some contemplated embodiments, one or more of the impact factors could relate to impact on the vendor. For example, a metric of customer complaints received by the vendor from the customer of a service case could be an impact factor, since a high rate of complaints is indicative of possible customer dissatisfaction with the vendor, which if it continues could lead to the customer switching to another service provider and/or switching its medical device fleet to another vendor.

In embodiments that include the optional operation 202, the impact factor scores may be computed from the derived features, e.g. an impact factor score indicative of the number of medical personnel who will be idled by the service case 136 may be computed from a feature consisting of a count or list of operators of the medical device over a defined time period; while, an impact factor score indicative of average number of patients affected per unit time of downtime of the medical imaging device that is the subject of the service case 136 can be computed from the count or list of patients of the medical device over the defined time period; and/or so forth.

At an operation 206, the server 111 is programmed to aggregate the impact factor scores to generate an impact score 140 for the service case 136 under assessment. To do so, the server 111 is programmed to compute the impact score 140 as a weighted sum of each of the impact factor scores 138. An impact score 140 can be calculated for each received service case 136.

At an operation 208, the server 111 is programmed to generate a list 142 of service cases 136 received by the intake interface 134 and annotated with corresponding impact scores 140. Optionally, the list 142 of service cases may be sorted or ranked by corresponding impact scores, so that cases with the highest impact score appear at the top of the list 142. The list 142 can be transmitted to the service device 102 and displayed on a graphical user interface (GUI) 144 presented on the display device 105. In some embodiments, the list 142 can be a ranked list of the received service cases 136 based on the corresponding impact score 140 for each service case 136.

At an operation 210, the electronic processor 101 of the service device 102 is programmed to receive inputs from a user via the user input device(s) 103 to the GUI 144, and assign scheduled times for resolving respective service cases 136 based on the received inputs. In another embodiment, the operation 210 may assign service cases to open servicing time slots automatically on the basis of the impact scores, with the cases with the highest impact score being assigned to the next open servicing time slots.

At an operation 212, notifications of the scheduled times or priorities 146 for resolving the respective service cases 136 are transmitted. To do so, the service device 102 and/or the server 111 includes a notification interface 148 configured to push notifications of the scheduled times 146 for resolving the respective service cases 136 to customers associated with the respective service cases 136. Each notification includes information summarizing the impact factor scores 138 computed for the corresponding service case 136. In some embodiments, the scheduled times 146, along with the computed list 142 and/or impact scores 140, are output to the customers via emails. To do so, the scheduled times 146 of the current service cases 136 are transmitted to a plurality of customer electronic processing devices 102c operable by a corresponding plurality of customers of the medical devices 120 (note that the customer electronic processing devices 102c can be configured similarly as the service device 102, and as such the description of the components of the customer electronic processing devices 102c are not repeated for brevity). In some examples, one or more inputs are received at the server 111 via the customer electronic processing devices 102c indicative of a selection of pathway to convey the computed impact score 140 for the current service case 136 of the scheduled times 146 at the customer where the medical device 120 is located.

In another embodiment, the scheduled times 146 of the current service cases 136 are transmitted to a plurality of remote electronic processing devices 102v operable by a vendor of the medical device 120 (again, the vendor electronic processing devices 102v can be configured similarly as the service device 102, and as such the description of the components of the vendor electronic processing devices 102v are not repeated for brevity). In some examples, one or more inputs are received at the server 111 via the vendor electronic processing devices 102v indicative of a ranking of a plurality of current service cases 136 based on the corresponding computed impact score 140 for each service case 136. The list 142 of ranked service cases 136 can be output on the remote electronic processing device 102v. In some contemplated embodiments, the operation 212 could also involve automatically dispatching field service engineers to sites in accordance with the times assigned in the operation 210.

As diagrammatically indicated in Fig. 2 by a feedback arrow 214, in some embodiments the impact score computed in operation 206 can be updated over time, in order to take into account changes such as the time the ticket has been open (longer open time typically increases the impact score), changes to the constituent impact factor scores computed in the operation 204, or so forth. In embodiments in which the impact factor scores are indicative of impact factors that include fleet level impacts, this updating may take into account the impact of new service cases arising among other medical devices. For example, if the fleet includes three MRI scanners and the service case 136 reduces or eliminates functionality of one MRI scanner, then the impact score of the service case 136 may be relatively low since the patient load handled by that one MRI scanner can be transferred to the other two MRI scanners. If, however, subsequently a second MRI scanner becomes the subject of a (different) service case that reduces or eliminates functionality of that second MRI scanner, then the impact score of the (first) service case for the (first) MRI scanner may be increased, since for example the impact factor score indicative of the number of idled medical personnel and the impact score indicative of the average number of patients affected will both increase as there is now only one remaining MRI scanner with full functionality.

### EXAMPLES

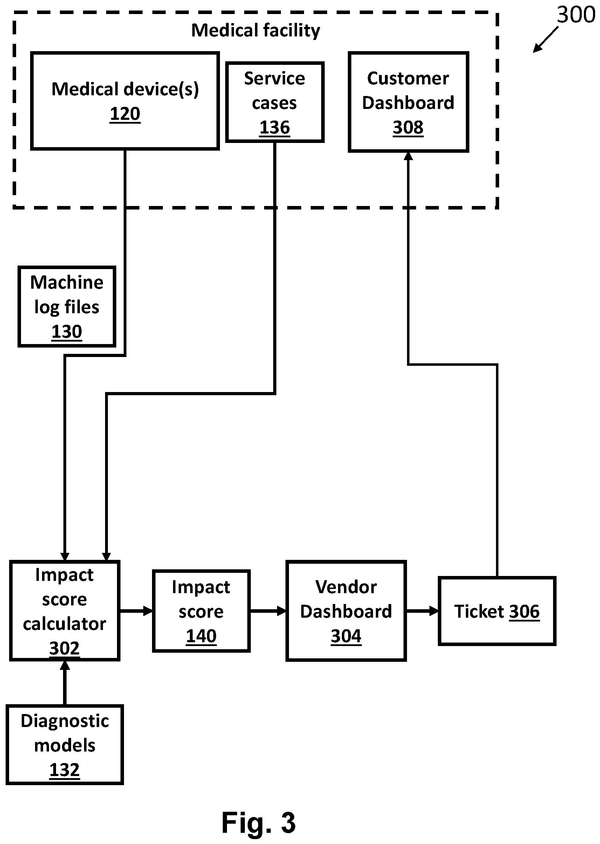

Fig. 3 shows another example of the system 100. The system 100 comprises a decision support system 300 for scheduling maintenance services that includes an impact score calculator 302 that calculates an objective quantitative impact score 140 upon a case 136 reported by a customer or identified by a diagnostic model 132, which provides prioritization input to a human scheduler and/or computerized scheduler resulting in a scheduling decision if and when to follow-up on the case. Following a decision, the system 300 provides information to customers that indicate factors that influence the decision through their communication endpoint(s) such as online service portal or email account.

As shown in Fig. 3, the service cases 136 can originate from hospital staff complaints from a medical facility where the medical device 120 is located, or from diagnostic models 132. For these cases 136, an impact score calculator 302 calculates the impact score 140 for each case 136. The impact score 140 is included with the rest of the case in an internal service dashboard 304. A remote engineer subsequently uses the impact score 140 to prioritize the case and create a ticket 306 to schedule a maintenance visit. The case together with information affecting prioritization (i.e., 'decision information') is provided to a customer dashboard 308 (i.e., a `communication endpoint'). This keeps the customer informed about status and provides insight what influenced prioritization and time needed for the repair to happen.

The impact score 140 can be calculated based on, for example, a number of patients to be rescheduled (or estimated by considering the average number of patients scheduled per device per time, e.g., daily, weekly), a distance and costs to reschedule urgent patients to neighbouring hospitals, patient outcome, a number of personnel that are impacted by system failure (or estimated by average number of hospitals personnel that run the device per time e.g., daily, weekly), an estimated time-to-system-up from the moment the case resolution is started, a contract type, a number of customer contracts, and so forth. The impact score 140 provides service staff and/or service tools additional information to assist them in making sensible and impactful decisions during the alert review process that guides them in making an objective assessment.

Decision information provided to customers consists of information can include, for example, factors that influence the prioritization decision for a certain issue. This forms an opportunity to create understanding with customers. This also opens an opportunity to educate customers on aspects that influence prioritization and which the customer may influence. For example, if contract type contributes to prioritization, the customer might consider upgrading the contract to resolve issues faster. The decision information can also include an indication when case will be addressed together with the reason. For example, field service engineer is in the neighbourhood.

The decision information is provided on a customer communication endpoint such as online portal, web dashboard, or email account. In some embodiments, the decision support system 300 also determines how decision information is provided to customers, for example, a communication channel or method, e.g., email with case update, online service portal, personal call by contact person, communication frequency and timing, communication audience, e.g., case creator, other staff, and so forth.

To train the decision support system 300 on its recommendations for how to provide decision information, the decision support system 300 may consider preferences, review scores and satisfaction surveys. This enables tailoring to the person and organization and hence optimize customer satisfaction.

A non-transitory storage medium includes any medium for storing or transmitting information in a form readable by a machine (e.g., a computer). For instance, a machine-readable medium includes read only memory ("ROM"), solid state drive (SSD), flash memory, or other electronic storage medium; a hard disk drive, RAID array, or other magnetic disk storage media; an optical disk or other optical storage media; or so forth.

The methods illustrated throughout the specification, may be implemented as instructions stored on a non-transitory storage medium and read and executed by a computer or other electronic processor.

The disclosure has been described with reference to the preferred embodiments. Modifications and alterations may occur to others upon reading and understanding the preceding detailed description. It is intended that the exemplary embodiment be construed as including all such modifications and alterations insofar as they come within the scope of the appended claims or the equivalents thereof.

## Claims

1. A service case scheduling system (100), comprising:
an intake interface (134) configured to receive service cases (136) for corresponding medical devices (120);
an electronic processor (111) programmed to, for a service case under assessment:
compute impact factor scores (138) for the service case under assessment, wherein the impact factor scores are indicative of respective impacts of the service case under assessment; and
aggregate the impact factor scores to generate an impact score (140) for the service case under assessment; and
a scheduling electronic processing device (102) configured to present a user interface (144) displaying a list (142) of service cases received by the intake interface and annotated with corresponding impact scores computed by the electronic processor.

2. The system (100) of claim 1, wherein the electronic processor (111) is further programmed to:
assign priorities (146) for resolving respective service cases based on user inputs received via the user interface.

3. The system (100) of either one claims 1 and 2, further comprising:
a notification interface (148) configured to push notifications of the priorities (146) for resolving the respective service cases (136) to customers associated with the respective service cases;
wherein each notification includes information summarizing the impact factor scores (138) computed by the electronic processor (111) for the corresponding service case.

4. The system (100) of any one of claims 1-3, wherein the impact factor scores (138) are indicative of respective impacts of the service case under assessment including at least a patient rescheduling impact and a personnel idle impact.

5. The system (100) of any one of claims 1-4, wherein the electronic processor (111) is programmed to derive features of the service case (136) under assessment by analysis of log data (130) from the corresponding medical device, wherein the impact factor scores (138) are computed from the derived features.

6. The system (100) of claim 5, wherein the electronic processor (111) is programmed to:
derive the features of the service case (136) under assessment using one or more diagnostic models (132) trained to identify a potential problem with the corresponding medical device (120).

7. The system (100) of any one of claims 1-6, wherein the intake interface (134) is configured to receive at least some of the service cases (136) via a natural language communication pathway.

8. The system (100) of any one of claims 1-7, wherein the intake interface (134) is configured to receive a portion of the service cases (136) via diagnostic models (132).

9. The system (100) of any one of claims 1-8, wherein the electronic processor (111) is further programmed to, for the service case under assessment, repeat the computing of the impact factor scores (138) and the aggregation of the impact factor scores to update the generated impact score (140).

10. The system (100) of any one of claims 1-9, wherein the impact factors include one or more of an average number of patients affected per unit time of downtime due to the service case, a number of medical personnel who will be idled by the service case, and a cost for rescheduling urgent patients to other resources due to the service case.

11. The system (100) of claim 10, wherein the electronic processor (111) is further configured to:
output the computed impact scores (140) and the impact factor scores (138).

12. The system (100) of any one of claims 9-11, wherein the electronic processor (111) is further programmed to:
receive, via a remote engineer electronic processing device (102v), one or more inputs indicative of a ranking of a plurality of current service cases (136) based on the corresponding computed impact score (140) for each service case; and
output, on the remote engineer electronic processing device, the list (142) of the ranked current service cases.

13. The system (100) of claim 12, wherein the electronic processor (111) is further programmed to:
output the scheduled times of the current service cases (136) to a plurality of customer electronic processing devices (102c) operable by a corresponding plurality of customers of the medical devices (120).

14. The system (100) of claim 13, wherein the electronic processor (111) is further programmed to:
receive one or more inputs via the customer electronic processing devices (102c) indicative of a selection of pathway to convey the computed impact score (140) for the current service case (136) of the scheduled times (146) at the customer where the medical device (120) is located.

15. A non-transitory computer readable medium (107, 127) storing instructions readable and executable by at least one electronic processor (101, 113) to:
for each service case of a plurality of received service cases (136) for corresponding medical devices (120):
assign impact factor scores (138) for a plurality of impact factors, wherein the impact scores are indicative of respective impacts of the service case; and
compute an impact score (140) for the service case based on the impact factor scores; and
output a list (142) of the received service cases annotated with the corresponding computed impact scores.
